# EUROPÄISCHE PATENTSCHRIFT

(11) **EP 1 458 997 B1**
(45) Veröffentlichungstag und Bekanntmachung des Hinweises auf die Patenterteilung: **14.06.2006**
(21) Anmeldenummer: 02792989.2
(22) Anmeldetag: 12.12.2002
(51) Int. Cl.: F16K 31/02

(54) **Kältegerät**
Refrigeration apparatus
Appareil de réfrigération

(30) Priorität: 19.12.2001 DE 10162498
(43) Veröffentlichungstag der Anmeldung: 22.09.2004
(73) Patentinhaber: BSH Bosch und Siemens Hausgeräte GmbH, 81739 München (DE)
(72) Erfinder: WENNING, Udo, 89537 Giengen/Brenz (DE); KORDON, Rolf, 89537 Giengen (DE); EBERHARDT, Hans-Frieder, 89537 Giengen-Burgberg (DE); NEUMANN, Michael, 89537 Giengen/Brenz (DE)
(74) Vertreter: Thoma, Lorenz
(86) Internationale Anmeldenummer: PCT/EP2002/014175
(87) Internationale Veröffentlichungsnummer: WO 2003/052306

(56) Entgegenhaltungen:
- GB-A- 1 226 481
- US-A- 4 493 435
- US-A- 4 772 807
- US-A- 4 973 024
- US-A- 5 189 991
- US-A- 5 318 268

## Beschreibung

Die vorliegende Erfindung betrifft ein Kältegerät mit einer Kältemaschine, in deren Kreislauf ein Mehrwegeventil eingesetzt ist.

Derartige Kältemaschinen kommen z.B. in Kältegeräten zum Einsatz, die mehrere jeweils durch einen eigenen Verdampfer auf unabhängig voneinander einstellbare Temperaturen regelbare Kühlfächer aufweisen; sie dienen dort zum Aufteilen des Kältemittelstroms auf einen oder mehrere Verdampfer. Die gegenwärtig in Kältemaschinen verwendeten Mehrwegeventile sind im allgemeinen Magnetventile. Diese haben ein Gehäuse mit mehreren Ventilsitzen und einem durch Magnetkraft zwischen stabilen Positionen an jeweils einem der Ventilsitze bewegbaren Schließorgan.

Ein nicht magnetisch betätigtes Magnetventil gemäß dem Oberbegriff des Anspruchs 1 ist aus DE 198 22 735 A1 bekannt. Das Gehäuse dieses bekannten Mehrwegeventils umfasst drei Kammern, eine mittlere Kammer, in der ein Schließorgan zwischen zwei Sitzen an gegenüberliegenden Seitenwänden beweglich ist, und zwei seitliche Kammern, in welche die Öffnungen der Ventilsitze münden und in denen jeweils eine Feder aus einer Form-Gedächtnis-Legierung untergebracht ist. Beide Federn drücken jeweils über einen Kolben und eine sich durch die Öffnung des jeweiligen Ventilsitzes erstreckende Stange auf das Schließorgan in der mittleren Kammer. Durch Erwärmen einer ersten der zwei seitlichen Kammern verlängert sich die darin befindliche Feder und drückt das Schließorgan gegen den zur zweiten seitlichen Kammer führenden Ventilsitz, wobei sie die Feder in der zweiten seitlichen Kammer zusammendrückt.

Die Stellbewegung des Schließorgans zwischen den zwei sich gegenüberliegenden Ventilsitzen ist bei diesem bekannten Mehrwegeventil ausschließlich durch die Federn aus Form-Gedächtnis-Legierung angetrieben. Hierfür muss diese Feder einen erheblichen Hub erzeugen können, der im allgemeinen größer sein wird als der Abstand zwischen den zwei Ventilsitzen, denn um das Schließorgan von einem Sitz zu lösen, muss die in der dahinter liegenden Kammer angeordnete Feder zunächst den nötigen Druck aufbauen, um entgegen eine möglicherweise an dem zunächst noch geschlossenen Ventilsitz anliegende Druckdifferenz zu überwinden und schließlich das Schließorgan mit nicht verschwindender Federkraft gegen den gegenüberliegenden Sitz zu drücken. Außerdem muss der Widerstand der Feder in der gegenüberliegenden seitlichen Kammer überwunden werden.

Um das Schließorgan mit einer vorgegebenen Kraft gegen den Ventilsitz der gegenüberliegenden Kammer andrücken zu können, muss die Feder so konstruiert sein, dass sie, wenn das Schließorgan am gegenüberliegenden Ventilsitz anliegt, um ein Wegstück δL kürzer ist als in ihrem freien, entspannten Zustand, wobei dieses Wegstück δL kleiner ist als die Längendifferenz ΔL der Feder zwischen ihrem zusammengedrückten Zustand und dem freien, entspannten Zustand. Ermüdungserscheinungen der Feder, die bei lang andauerndem Gebrauch auftreten können, können zu einer Verringerung der Länge der Feder im freien, entspannten Zustand führen, so dass δL Null oder gar negativ wird und der zum Verlagern des Schließorgans zum gegenüberliegenden Ventilsitz erforderliche Hub nicht mehr aufgebracht werden kann.

Aufgabe der vorliegenden Erfindung ist, eine Kältermaschine mit einem, mit Hilfe eines Elements aus einer Form-Gedächtnis-Legierung umschaltbares Mehrwegeventil anzugeben, wo das Schließorgan des Mehrwegeventils reproduzierbar mit einer gleichbleibenden, von Ermüdungserscheinungen eines Elements aus Form-Gedächtnis-Legierung unabhängigen Kraft gegen den jeweils eingenommenen Ventilsitz gedrückt wird.

Die Aufgabe wird gelöst durch ein Kältegerät mit den Merkmalen des Anspruchs 16.

Das von dem Stellglied unabhängige Federelement kann aus einem beliebigen federelastischen Material mit einer besseren Langzeitstabilität als der der Form-Gedächtnis-Legierung hergestellt sein. Derartige Materialien, insbesondere Federstähle, stehen dem Fachmann zur Verfügung. Beim Umschalten des erfindungsgemäßen Mehrwegeventils arbeitet ein Stellglied beim Verschieben des Schließorgans von einem Sitz zunächst gegen den Widerstand des Federelements an. Dabei wird schließlich ein Gleichgewichtspunkt überschritten, von welchem aus die Kraft des Federelements das Schließorgan gegen einen anderen Sitz zu drücken beginnt. Ab diesem Gleichgewichtspunkt übernimmt somit das Federelement den Antrieb der Bewegung des Schließorgans, und die Kraft, mit der das Schließorgan gegen den jeweiligen Ventilsitz gedrückt wird, wird aufgebracht von dem Federelement. Wie groß die Kraft ist, die das Stellglied aus Form-Gedächtnis-Legierung am Gleichgewichtspunkt noch auf das Schließorgan auszuüben im Stande ist, und wie weit sich das Stellglied noch verformt, bis es eine Ruheposition erreicht, ist für die Funktionsfähigkeit des erfindungsgemäßen Ventils ohne Bedeutung. Diese Kraft kann daher an einem neuen Ventil großzügig dimensioniert sein, so dass man gewiss ist, dass sie durch Ermüdung nicht Null wird.

Vorzugsweise wird als Federelement eine Blattfeder verwendet.

Einer bevorzugten Ausgestaltung der Erfindung zufolge ist das Schließorgan zwischen zwei einander zugewandten Sitzen bewegbar, und die Blattfeder ist in der Lage, zwei stabile Stellungen einzunehmen, wobei in jeder der Stellungen eine konvexe Wölbung der Blattfeder einem der Sitze zugewandt ist.

Als Stellglied wird vorzugsweise ein gekrümmter Körper mit einer dem Schließorgan zugewandten konvexen Seite eingesetzt ist, der sich unter Erwärmung verlängert. Eine solche Erwärmung führt bei festgehaltenen Enden des Körpers zu einer Verstärkung der Krümmung und damit zu einer Bewegung der konvexen Seite in Richtung des Schließorgans, durch die das Schließorgan von seinem Sitz verdrängt werden kann. Der gekrümmte Körper kann insbesondere eine Platten- oder Balkenform haben.

Gemäß einer bevorzugten Ausgestaltung weist das Mehrwegeventil ein Gehäuse mit einer zentralen Kammer, in der das Schließorgan bewegbar ist, und wenigstens einer peripheren Kammer auf, wobei jede periphere Kammer ein Stellglied aufnimmt und in der Lage ist, mit der zentralen Kammer über eine von einem der Sitze umgebene Öffnung zu kommunizieren. Ein Übertragungsstift zum Übertragen einer Verformung des Stellgliedes auf das Schließorgan erstreckt sich durch die Öffnung.

Bei einer alternativen Ausgestaltung sind das Federelement und das wenigstens eine Stellglied in einer gemeinsamen Kammer untergebracht. In diesem Fall ist das Stellglied zweckmäßigerweise zwischen einer Seitenwand des Gehäuses und dem Federelement angeordnet, wobei sich in der Seitenwand derjenige Sitz befindet, von dem das Stellglied das Schließorgan verdrängen kann.

Bei dieser Ausgestaltung weist das Stellglied vorzugsweise eine Öffnung aus, durch die das Schließorgan hindurch bewegbar ist, um den Sitz zu verschließen oder freizugeben.

Zum selektiven Erhitzen eines jeden Stellgliedes ist diesem jeweils eine elektrische Heizeinrichtung zugeordnet. Vorzugsweise ist diese Heizeinrichtung ein Heizwiderstand, der sich auf der Oberfläche des Stellgliedes erstreckt. Diese Anordnung erlaubt es, die Heizeinrichtung in direktem Kontakt mit Fluid zu bringen, welches das Ventil durchströmt, und so das Stellglied im Anschluss an seine Betätigung schnell wieder zu kühlen. Dies ist zweckmäßig, um das Mehrwegeventil mit hoher Schalthäufigkeit betreiben zu können.

Einfacher und preiswerter als die Anordnung einer Heizeinrichtung auf der Oberfläche des Stellgliedes ist die Anordnung einer Heizeinrichtung außerhalb des Gehäuses. Um auch bei dieser Ausgestaltung eine schnelle Erwärmung eines Stellgliedes erreichen zu können, ist es zweckmäßig, dass das Gehäuse des Mehrwegeventils und das Stellglied einteilig aus einer Form-Gedächtnis-Legierung aufgebaut sind, um so Wärmeübergangswiderstände zwischen dem von der Heizeinrichtung erhitzten Teil des Gehäuses und dem Stellglied zu minimieren.

Gegenstand der Erfindung ist ein Kältegerät mit einer Kältemaschine mit einem mehrere Verdampfer aufweisenden Kältemittelkreislauf, bei der zum Aufteilen von Kältemittel auf die verschiedenen Verdampfer ein Mehrwegeventil der oben definierten Art im Kältemittelkreislauf der Maschine angeordnet ist.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Ansicht eines Mehrwegeventils gemäß einer ersten Ausgestaltung;
- Fig. 2: einen Schnitt durch das Mehrwegeventil aus Fig. 1 entlang der durch Linien A, B in Fig. 1 definierten Ebene;
- Fig. 3: einen Schnitt entlang der durch Linien A, C in Fig. 1 definierten Ebene;
- Fig. 4: eine perspektivische, teilweise aufgeschnittene Ansicht eines Mehrwegeventils gemäß einer zweiten Ausgestaltung;
- Fig. 5: einen Schnitt durch ein Mehrwegeventil gemäß einer dritten Ausgestaltung;
- Fig. 6: einen axialen Schnitt durch ein Mehrwegeventil mit drei Ausgängen; und
- Fig. 7: einen Schnitt durch das Mehrwegeventil der Fig. 7 senkrecht zu dessen Achse.

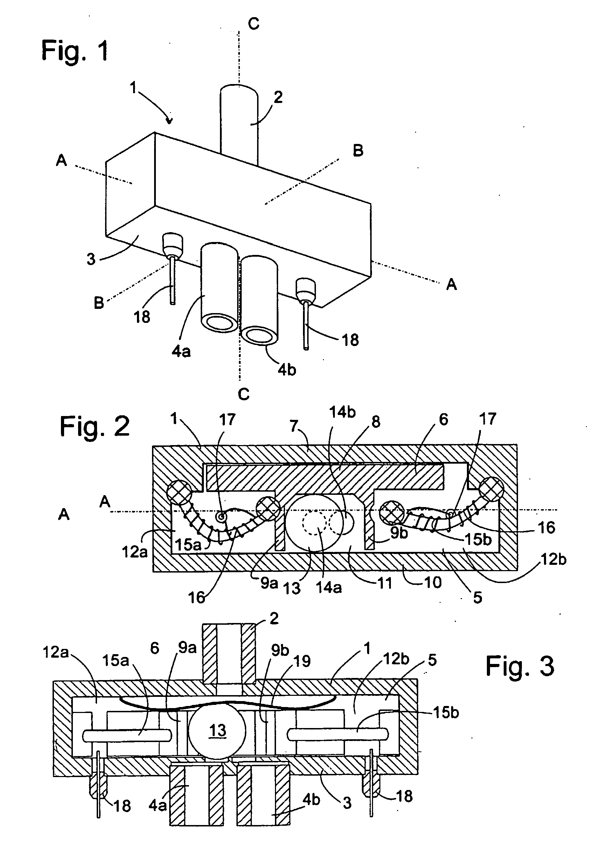

Fig. 1 zeigt ein Mehrwegeventil mit einem Gehäuse 1 aus Metall, das an einer Gehäuseseite, hier der vom Betrachter abgewandten Oberseite, einen Eingangsanschluss 2 und an der gegenüberliegenden Gehäuseunterseite 3 zwei Ausgangsanschlüsse 4a, 4b für ein Fluid aufweist. Ebenfalls an der Unterseite 3 sind zwei Stromdurchführungen 18 gegen das Gehäuse 1 isoliert in dessen Inneres geführt. Ein Masseanschluss ist direkt mit dem Gehäuse an einer beliebigen Stelle verbunden, er ist in der Fig. nicht dargestellt.

Fig. 2 zeigt einen "horizontalen" Schnitt durch das Mehrwegeventil der Fig. 1 in der durch die Linien A, B der Fig. 1 definierten Ebene. In einer Kammer 5 im Innern des Gehäuses 1 ist ein Schlitten 6 aus einem elektrisch nicht leitenden Material, z.B. einem Kunststoff, in Richtung der Linie A verschiebbar gelagert. Der Schlitten 6 umfasst eine an einer Seitenwand 7 des Gehäuses 1 verschiebbar geführte Basisplatte 8 und zwei Schenkel 9a, 9b, die sich ausgehend von der Basisplatte 8 bis in einen geringen Abstand von der gegenüberliegenden Seitenwand 10 des Gehäuses erstrecken. Die Schenkel 9a, 9b unterteilen die Kammer 5 in eine zentrale Kammer 11 zwischen den zwei Schenkeln 9a, 9b und zwei seitliche Kammern 12a, 12b jeweils jenseits von den Schenkeln 9a, 9b.

In der zentralen Kammer 11 ist eine als Schließorgan fungierende Kugel 13 untergebracht. In der in der Fig. gezeigten Konfiguration des Mehrwegeventils liegt die Kugel 13 mittig auf einem am Boden der Kammer 5 gebildeten linken Ventilsitz 14a und versperrt so den diesem Ventilsitz 14a zugeordneten Ausgangsanschluss 4a (siehe auch Fig. 3). Ein zweiter, rechter Ventilsitz 14b, der zu dem rechten Ausgangsanschluss 4b gehört, ist offen.

In den zwei seitlichen Kammern 12a, 12b sind Elemente 15a, 15b aus einer Form-Gedächtnis-Legierung, hier in Form gekrümmter Stäbe, untergebracht, die jeweils an einem Ende an dem Gehäuse 1 gehalten sind. Ein zweites Ende des linken Elements 15a liegt in einer Aussparung des linken Schenkels 9a an, ein entsprechendes zweites Ende des rechten Elements 15b liegt einer solchen Aussparung 20b gegenüber, ohne sie zu erreichen. Das Element 15b, das sich in der einem heißen Zustand entsprechenden Gedächtniskonfiguration befindet, ist somit völlig entspannt. Diese Gedächtniskonfiguration könnte allterdings auch so gewählt sein, dass das Ende des Elements 15b die Aussparung 20b so eben erreicht oder mit einer geringen Restkraft gegen diese drückt. Um jedes Element 15a, 15b ist ein Heizdraht 16 gewickelt, der an seinem dem Schenkel 9a bzw. 9b zugewandten Ende mit einem Leiter 17 einer der Durchführungen 18 verbunden ist und dessen gegenüberliegendes Ende über das Gehäuse 1 mit Masse verbunden ist.

Fig. 3 zeigt einen Schnitt durch das Mehrwegeventil der Fig. 1 in der durch die Linien A, C von Fig. 1 definierten Ebene. Die Höhe des Schlittens 6 ist geringer als der Durchmesser der Kugel 13, und eine oberhalb des Schlittens 6 zwischen der Kugel 13 und der Oberseite des Gehäuses 1 eingespannte Blattfeder 19 übt auf die Kugel eine abwärts gerichtete Kraft aus, die die Kugel 13 fest gegen den jeweils von ihr belegten Sitz, hier den Sitz 14a, gedrückt hält.

Wenn das Element 15a mit Hilfe seines Heizdrahts 16 erhitzt wird, streckt es sich aus und verschiebt dabei den Schlitten 6 nach rechts. Dabei verdrängt der linke Schenkel 9a die Kugel 13 von ihrem Platz auf dem linken Ventilsitz 14a. Bei dieser Verdrängung wird die Kugel 13 entgegen der von der Blattfeder 19 ausgeübten, abwärts gerichteten Kraft angehoben, bis sie eine labile Gleichgewichtsstellung zwischen den zwei Ventilsitzen 14a, 14b erreicht. Wenn die Kugel diese Gleichgewichtsstellung überwunden hat, treibt die Kraft der Blattfeder 19 sie in Richtung des rechten Ventilsitzes 14b, wobei durch die Bewegung der Kugel 13 der Schlitten 6 sich vom Element 15a löst und mitgenommen wird. Das Element 15a, das nun keine Arbeit mehr leisten muss, kann sich weiter ausstrecken, bis es die seinem heißen Zustand entsprechende Gleichgewichtskonfiguration erreicht. Wenn der Schlitten mit seiner Aussparung 20b auf das Element 15b stößt, so verformt er dieses, angetrieben von der Kraft der Blattfeder 19, bis die Kugel den rechten Ventilsitz 14b erreicht hat. Da das Element 15b kalt ist, ist die für diese Verformung aufzubringende Kraft wesentlich geringer als die Kraft, die das erhitzte Element 15a aufgebracht hat, um die Kugel 13 bis zum Gleichgewichtspunkt zu verschieben.

Die Kraft, mit der die Kugel gegen den Ventilsitz 14b gedrückt wird, ist bestimmt durch die Kraft der Feder 19 und gegebenenfalls einen an dem Ventilsitz abfallenden Druck. Sie ist unabhängig vom exakten Wert der vom Element 15a aufgebrachten Kraft; eine Ermüdung oder sonstige Drift im Verhalten des Elements 15a wirkt sich somit auf die auf die Kugel 13 wirkende Schließkraft nicht aus, so lange die Kraft des Elements 15a ausreicht, die Kugel 13 über die Gleichgewichtsposition zu drängen.

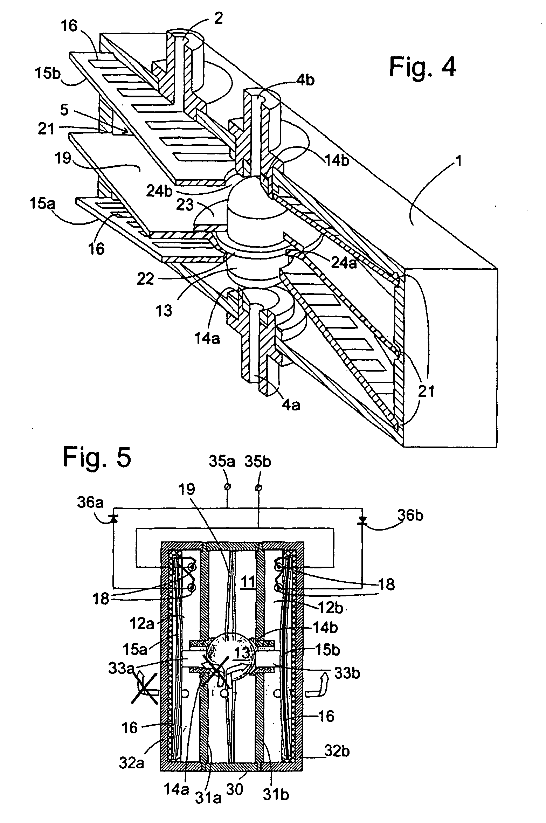

Fig. 4 zeigt eine perspektivische Ansicht eines Mehrwegeventils gemäß einer zweiten Ausgestaltung, mit aufgeschnittenem Gehäuse 1. In einer Kammer 5 des Gehäuses ist ein Schließorgan 13 zwischen zwei Ventilsitzen 14a, 14b bewegbar, die zu zwei einander gegenüberliegend an einer Unterseite bzw. Oberseite des Gehäuses angeordneten Ausgangsanschlüssen 4a bzw. 4b gehören. Das Schließorgan 13 hat im wesentlichen die Form eines Zylinders mit abgerundeten Stirnflächen. Das Schließorgan 13 ist in einem zentralen Durchgang einer Blattfeder 19 über einen umlaufenden Wulst 22 befestigt, der zwischen der Oberseite der Blattfeder 19 und einem auf der Blattfeder z.B. durch Punktschweißung befestigten Haltering 23 eingeklemmt ist. Die Blattfeder 19 erstreckt sich über die gesamte Länge der Kammer 5 und ist an zwei Enden in Nuten 21 gehalten, die sich über zwei einander gegenüberliegende Schmalseiten der Kammer 5 erstrecken. Die Fig. 4 zeigt die Blattfeder 19 in einem nach oben gewölbten Zustand, d.h., die konvexe Seite der Blattfeder 19 ist dem Ventilsitz 14b an der Oberseite des Gehäuses 1 zugewandt, und die Blattfeder 19 drückt das Schließorgan 13 gegen diesen Sitz 14b, um ihn zu verschließen.

Zwei plattenförmige Elemente 15a, 15b aus Form-Gedächtnis-Legierung sind in der Kammer 5 jeweils oberhalb bzw. unterhalb der Blattfeder 19 angeordnet und wie diese in Nuten 21 an den Schmalseiten der Kammer gehalten. Die Elemente 15a, 15b weisen jeweils eine zentrale Öffnung 24a, 24b auf, durch die das Schließorgan 13 hindurchgreifen kann, um den dem Element 15a bzw. 15b zugeordneten Ventilsitz 14a bzw. 14b zu verschließen.

Ein Heizdraht 16 erstreckt sich im Zickzack über die Oberflächen der Elemente 15a, 15b. Er kann sich über Ober- und Unterseite jedes Elements 15a, 15b oder über jeweils nur eine von beiden Seiten erstrecken. Der Heizdraht 16 jedes Elements 15a, 15b ist unabhängig vom anderen Element 15b, 15a mit Strom beaufschlagbar, um das betreffende Element selektiv zu erhitzen.

Wenn in der in Fig. 4 gezeigten Konfiguration der Heizdraht 16 des oberen Elements 15b mit Strom versorgt wird, so verlängert sich dieses Element, und da es an seinen Längsenden in den Nuten 21 gehalten ist, führt die Verlängerung dazu, dass der die Öffnung 24b umgebende zentrale Bereich des Elements nach unten ausweicht und die Blattfeder 19 abwärts drückt. Dadurch gerät die Blattfeder 19 zunehmend unter Spannung, und sobald ein Gleichgewichtspunkt auf halber Höhe der Kammer 5 überwunden ist, weicht die Blattfeder 19 schlagartig nach unten aus, wobei sie das untere Element 15a verformt und das Schließorgan 13 auf den Sitz 14a trifft und diesen verschließt. Sobald nach so erfolgtem Umschalten des Ventils die Versorgung des Elements 15b mit Heizstrom abgebrochen wird, kühlt dieses im Strom des vom Eingangsanschluss 2 durch die Kammer 5 zum Ausgangsanschluss 4b strömende Fluid zügig ab. Nun kann das Element 15a mit Heizstrom versorgt werden, und der oben beschriebene Vorgang läuft in umgekehrter Richtung ab.

Fig. 5 zeigt im Schnitt eine dritte Ausgestaltung des Ventils. Das Gehäuse 1 ist hier aus mehreren Teilen zusammengefügt, einem zentralen Rahmen 30, zwei Zwischenwänden 31 a, 31 b und zwei Seitenteilen 32a, 32b. Der Rahmen 30 und die zwei Zwischenwände 31 a, 31 b begrenzen eine zentrale Kammer 11 des Ventils, in der ein hier wiederum kugelförmiges Schließorgan 13 an einer Blattfeder 19 gehalten ist. Die Blattfeder 19 weist wie beim Beispiel der Fig. 4 zwei stabile Zustände mit jeweils entgegengesetzter Krümmung auf, in der sie das Schließorgan 13 jeweils gegen einen von zwei Ventilsitz 14a, 14b drückt, die einander gegenüberliegen in den Zwischenwänden 31a, 31b angeordnet sind.

Die Zwischenwände 31a, 31b begrenzen zusammen den Seitenteilen 32a, 32b jeweils seitliche Kammern 12a, 12b des Mehrwegeventils, in denen sich ein Element 15a, 15b aus Form-Gedächtnis-Legierung erstreckt. Die Elemente 15a, 15b haben wie beim Beispiel der Fig. 4 die Form rechteckiger Platten, von denen zwei gegenüberliegende Kanten an Wänden der seitlichen Kammern 12a, 12b so eingespannt sind, dass die Elemente 15a, 15b eine Wölbung mit dem Schließorgan 13 zugewandter konvexer Seite aufweisen. Ein Heizwiderstand 16 ist auf Vorder- und Rückseite der Elemente 15a bzw. 15b aufgebracht.

Zwei Übertragungsstifte 33a, 33b erstrecken sich durch von den Ventilsitzen 14a, 14b umgebene Öffnungen der Zwischenwände 31 a, 31 b zwischen dem Element 15a bzw. 15b und dem Schließorgan 13.

Fig. 5 zeigt die Blattfeder 19 in einem nach links gekrümmten Zustand, in der sie das Schließorgan 13 gegen den linken Ventilsitz 14a gedrückt hält. Wenn in dieser Konfiguration des Ventils das linke Element 15a erhitzt wird und deshalb seine Länge zunimmt, führt dies zu einer Zunahme seiner Wölbung, so dass das Schließorgan 13 über den Übertragungsstift 33a vom Sitz 14a verdrängt wird. Nach Durchlaufen der Gleichgewichtsposition in der Mitte der zentralen Kammer 11 kippt die Krümmung der Blattfeder 19 nach rechts, wodurch über den Übertragungsstift 33b das Element 15b in der rechten seitlichen Kammer 12b gestaucht wird und das Schließorgan 13 den Sitz 14b versperrt.

Die Heizdrähte 16 der zwei Elemente 15a, 15b werden gemeinsam über zwei Anschlüsse 35a, 35b mit Heizstrom versorgt.

Der Anschluss 15a ist mit einer ersten Stromdurchführung 18 der linken seitlichen Kammer 12a über eine erste Diode 36a und mit einer ersten Stromdurchführung 18 der rechten seitlichen Kammer 12b direkt verbunden. Der Anschluss 35b ist mit einer zweiten Stromdurchführung 18 der linken seitlichen Kammer 12a direkt und mit einer zweiten Stromdurchführung 18 der rechten seitlichen Kammer 12b über eine zweite Diode 36b verbunden. Die Dioden 36a, 36b sind antiparallel geschaltet, so dass ein an die Anschlüsse 35a, 35b angelegter Heizstrom je nach Vorzeichen nur den Heizdraht 16 des Elements 15a oder den des Elements 15b versorgt.

Selbstverständlich können auch die Ventile gemäß Figs. 1 bis 3 bzw. 4 über antiparallele Dioden 36a, 36b mit Strom versorgt werden.

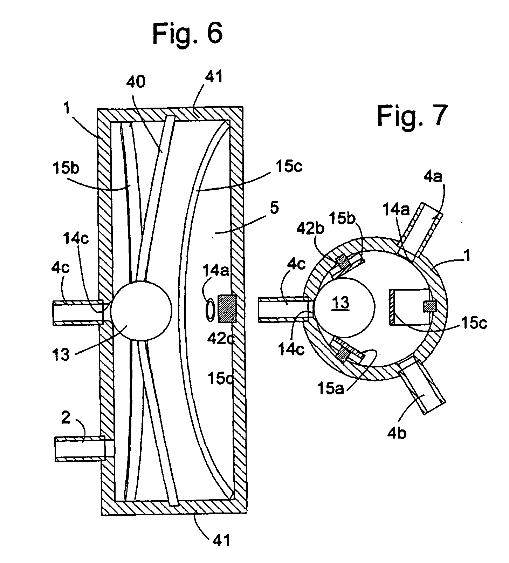

Eine vierte Ausgestaltung wird anhand der Figs. 6 und 7 beschrieben. Das Mehrwegeventil gemäß dieser vierten Ausgestaltung hat ein zylindrisches Gehäuse 1, das in Fig. 6 in einem Schnitt längs der Achse und in Fig. 7 quer zur Achse gezeigt ist.

Das Gehäuse hat drei Ausgangsanschlüsse 4a, 4b, 4c, die jeweils in Abständen von 120° um die Achse angeordnet sind. Ein Eingangsanschluss 2 kann an weitgehend beliebiger Stelle am Gehäuse 1 platziert sein. Ein balkenförmiges Federelement 40 ist mit einer oberen und unteren Wand 41 des Gehäuses jeweils an den Schnittpunkten der Wände 41 mit der Längsachse gehalten. Das Federelement 40 ist länger als die von den Wänden 41 begrenzte Kammer 5 und verläuft durch die Kammer 5 gekrümmt. An dem Federelement 40 ist mittig ein kugelförmiges Schließorgan 13 befestigt, dass in der in den Figuren gezeigten Stellung den Ventilsitz 14c des Ausgangsanschlusses 4c versperrt.

Streifenförmige Elemente 15a, 15b, 15c aus Form-Gedächtnis-Legierung sind jeweils zwischen zwei Ausgangsanschlüssen in einem Winkelabstand von 60° von diesen in der Kammer 5 angeordnet. Das dem Ausgangsanschluss 4c gegenüberliegende Element 15c ist in einem langgestreckten, weit ins Innere der Kammer 5 eingreifenden Zustand gezeigt; die dem Ausgangsanschluss 4c benachbarten Elemente 15a, 15b sind gestaucht, so dass sie den Zugang des Schließorgans 13 zum Ventilsitz 14c nicht behindern. Wenn eines der gestauchten Elemente, z.B. das Element 15a mit Hilfe eines auf seiner Oberfläche angebrachten, nicht dargestellten Heizwiderstandes erhitzt wird, so beginnt es, sich zur Achse des Gehäuses hin vorzuwölben und dabei das Schließorgan 13 gegen den Widerstand des Federelements 40 vom Ventilsitz 14c zu verdrängen und gegen die Oberfläche des Elements 15b zu schieben. Um dabei eine übermäßige Stauchung des Elements 15b zu verhindern, ist an dessen Rückseite ein Stützkörper 42b angeordnet, der eine Stauchung des Elements 15b über dessen gezeigte Stellung hinaus verhindert. Sobald das Element 15a das Schließorgan über mehr als die Hälfte des Weges zum ihm gegenüberliegenden Ventilsitz 14a entgegen der Kraft des Federelements 40 verschoben hat, beginnt das Federelement 40, die weitere Bewegung des Schließkörpers 13 zu unterstützen und schiebt diesen gegen den Sitz 14a, wobei es gleichzeitig das Element 15c staucht. Jedes der drei Elemente 15a, 15b, 15c ist so in der Lage, das Schließorgan 13 von den zwei ihm benachbarten Ventilsitzen zu verdrängen und den gegenüberliegenden Ventilsitz zu schließen.

Mehrwegeventile der oben beschriebenen Art sind einsetzbar in Kältemaschinen für Kältegeräte, die mehrere Verdampfer für getrennt zu regelnde Kühlfächer aufweisen, wo sie zum Verteilen eines Kältemittelstroms auf die verschiedenen Verdampfer genutzt werden können. In einer solchen Kältemaschine wird beim Erhitzen eines der Element aus Form-Gedächtnis-Legierung ihn umgebendes Kältemittel im allgemeinen zu sieden beginnen, wodurch sich zunächst eine gute thermische Isolation des Elements von seiner Umgebung ergibt. Sobald das Element nicht mehr mit Heizstrom versorgt wird, wird das es umgebende verdampfte Kältemittel vom das Ventil durchlaufenden Strom fortgerissen, so dass das Element mit flüssigem Kältemittel in Kontakt kommt und schnell wieder abgekühlt wird. Sobald das Element abgekühlt ist, ist ein neuer Schaltvorgang möglich.

## Patentansprüche

1. Kältegerät mit mehreren getrennt regelbaren Kühlfächern und einem Kältekreislauf, der mehrere Verdampfer für die getrennt zu regelnden Kühlfächer und ein Mehrwegeventil zum Verteilen eines Kältemittelstromes des Kältekreislaufs auf die mehreren Verdampfer umfasst, wobei das Mehrwegventil ein Gehäuse (1), das mehrere Ein- und Ausgänge (2, 4a, 4b, 4c) und wenigstens eine Kammer (5) mit mehreren jeweils einem Ein- oder Ausgang zugeordneten Sitzen (14a, 14b) aufweist, ein zwischen den Sitzen (14a, 14b, 14c) bewegbares Schließorgan (13), wenigstens ein Stellglied (15a, 15b, 15c) in Form eines Elements aus einer Form-Gedächtnis-Legierung, das in der Lage ist, bei Erhitzung das Schließorgan (13) von einem der Sitze (14a, 14b, 14c) zu verdrängen, und einer dem Stellglied (15a, 15b, 15c) zugeordneten elektrischen Heizeinrichtung (16) zum selektiven Erhitzen des Stellgliedes, **dadurch gekennzeichnet, dass** die Heizeinrichtung (16) durch das Ventil durchströmende Fluid in direktem Kontakt kühlbar ist und **gekennzeichnet durch** ein Federelement (19, 40), das das Schließorgan (13) gegen jeden jeweils von ihm belegten Sitz (14a, 14b) drückt.

2. Kältegerät nach Anspruch 1, **dadurch gekennzeichnet, dass** das Federelement eine Blattfeder (19) ist.

3. Kältegerät nach einem der vorhergehenden Ansprüche, **dadurch gekennzeichnet, dass** das Federelement (19, 40) eine Mehrzahl von stabilen Stellungen aufweist, und dass es in jeder der stabilen Stellungen das Schließorgan (13) gegen einen der Sitze (14a, 14b, 14c) drückt.

4. Kältegerät nach einem der vorhergehenden Ansprüche, **dadurch gekennzeichnet, dass** das Schließorgan (13) zwischen zwei einander zugewandten Sitzen (14a, 14b) bewegbar ist, und dass die Blattfeder (19) in der Lage ist, zwei stabile Stellungen einzunehmen, wobei in jeder der Stellungen eine konvexe Wölbung der Blattfeder (19) einem der Sitze (14a, 14b) zugewandt ist.

5. Kältegerät nach einem der vorhergehenden Ansprüche, **dadurch gekennzeichnet, dass** das Stellglied (15a, 15b, 15c) ein gekrümmter Körper mit einer dem Schließorgan (13) zugewandten konvexen Seite ist, der sich unter Erwärmung verlängert.

6. Kältegerät nach einem der vorhergehenden Ansprüche, **dadurch gekennzeichnet, dass** es ein Gehäuse (1) mit einer zentralen Kammer (11), in der das Schließorgan (13) bewegbar ist, und wenigstens einer peripheren Kammer (12a, 12b) umfasst, wobei jede periphere Kammer (12a, 12b) ein Stellglied (15a, 15b) aufnimmt und in der Lage ist, mit der zentralen Kammer (11) über eine von einem der Sitze (14a, 14b) umgebene Öffnung zu kommunizieren, und ein Übertragungsstift (33a, 33b) sich durch die Öffnung vom Stellglied (15a, 15b) zum Schließorgan (13) erstreckt.

7. Kältegerät nach einem der Ansprüche 1 bis 5, **dadurch gekennzeichnet, dass** das Federelement (19) und das wenigstens eine Stellglied (15a, 15b) in einer gemeinsamen Kammer (5) untergebracht sind, und dass das Stellglied (15a, 15b) zwischen einer Seitenwand des Gehäuses (1), die einen der Sitze (14a, 14b) aufweist, und dem Federelement (19) angeordnet ist.

8. Kältegerät nach Anspruch 7, **dadurch gekennzeichnet, dass** Stellglied (15a, 15b) eine Öffnung (24a, 24b) aufweist, durch die das Schließorgan (13) hindurch bewegbar ist, um den Sitz (14a, 14b) zu verschließen oder freizugeben.

9. Kältegerät nach Anspruch 7 oder 8, **dadurch gekennzeichnet, dass** zwei Sitze (14a, 14b) in diametral gegenüberliegenden Seitenwänden des Gehäuses (1) angeordnet sind.

10. Kältegerät nach einem der Ansprüche 1 bis 9, **dadurch gekennzeichnet, dass** die Heizeinrichtungen (16) zweier Stellglieder (15a, 15b) über antiparallele Dioden (36a, 36b) alternativ mit Heizstrom versorgbar sind.

11. Kältegerät nach einem der Ansprüche 1 bis 10, **dadurch gekennzeichnet, dass** die Heizeinrichtung ein sich auf der Oberfläche des Stellgliedes (15a, 15b, 15c) erstreckender Heizwiderstand (16) ist.

12. Kältegerät nach einem der Ansprüche 1 bis 10, **dadurch gekennzeichnet, dass** die Heizeinrichtung außerhalb des Gehäuses (1) angeordnet ist.

13. Kältegerät nach Anspruch 12, **dadurch gekennzeichnet, dass** das Gehäuse (1) und das Stellglied (15a, 15b) einteilig aus einer Form-Gedächtnis-Legierung aufgebaut sind.

## Claims

1. Refrigerating appliance with several separately regulable cooling compartments and a refrigerating circuit, which comprises several evaporators for the cooling compartments, which have to be separately regulated, and a multi-way valve for distributing a refrigerant flow of the refrigerant circuit to the several evaporators, wherein the multi-way valve comprises a housing (1), which has several inlets and outlets (2, 4a, 4b, 4c) and at least one chamber (5) with several seats (14a, 14b) each associated with a respective inlet or outlet, a closing element (13) movable between the seats (14a, 14b, 14c), at least one setting element (15a, 15b, 15c) in the form of an element of a shape-memory alloy which is in a position in the case of heating of the closing element (13) of displacing from one of the seats (14a, 14b, 14c) and an electrical heating device (16), which is associated with the setting element (15a, 15b, 15c), for selective heating of the setting element, **characterised in that** the heating device (16) can be cooled in direct contact by fluid flowing through the valve and **characterised by** a spring element (19, 40) which presses the closing element (13) against each seat (14a, 14b) respectively occupied by the element.

2. Refrigerating appliance according to claim 1, **characterised in that** the spring element is a leaf spring (19).

3. Refrigerating appliance according to one of the preceding claims, **characterised in that** the spring element (19, 40) has a plurality of stable settings and that it presses against one of the seats (14a, 14b, 14c) in each of the stable settings of the closing element (13).

4. Refrigerating appliance according to one of the preceding claims, **characterised in that** the closing element (13) is movable between two mutually facing seats (14a, 14b) and that the leaf spring (19) is in a position of adopting two stable settings, wherein in each of the settings a convex arching of the leaf spring (19) faces one of the seats (14a, 14b).

5. Refrigerating appliance according to one of the preceding claims, **characterised in that** the setting element (15a, 15b, 15c) is a curved body with a convex side which faces the closing element (13) and lengthens when heated.

6. Refrigerating appliance according to one of the preceding claims, **characterised in that** it comprises a housing (1) with a central chamber (11), in which the closing element (13) is movable, and at least one peripheral chamber (12a, 12b), wherein each peripheral chamber (12a, 12b) receives a setting element (15a, 15b) and is in a position of communicating with the central chamber (11) by way of an opening surrounded by one of the seats (14a, 14b), and a transmission pin (13a, 13b) extends through the opening from the setting element (15a, 15b) to the closing element (13).

7. Refrigerating appliance according to one of claims 1 to 5, **characterised in that** the spring element (19) and the at least one setting element (15a, 15b) are accommodated in a common chamber (5) and that the setting element (15a, 15b) is arranged between a side wall of the housing (1), which has one of the seats (14a, 14b), and the spring element (19).

8. Refrigerating appliance according to claim 7, **characterised in that** the setting element (15a, 15b) has an opening (24a, 24b) through which the closing element (13) is movable in order to close or free the seat (14a, 14b).

9. Refrigerating appliance according to claim 7 or 8, **characterised in that** two seats (14a, 14b) are arranged in diametrically opposite side walls of the housing (1).

10. Refrigerating appliance according to one of claims 1 to 9, **characterised in that** the heating devices (16) of two setting elements (15a, 15b) can be alternatively supplied with heating current by way of anti-parallel diodes (36a, 36b).

11. Refrigerating appliance according to one of claims 1 to 10, **characterised in that** the heating device is a heating resistance (16) extending on the surface of the setting element (15a, 15b, 15c).

12. Refrigerating appliance according to one of claims 1 to 10, **characterised in that** the heating device is arranged outside the housing (1).

13. Refrigerating appliance according to claim 12, **characterised in that** the housing (1) and the setting element (15a, 15b) are integrally constructed from a shape-memory alloy.

## Revendications

1. Appareil frigorifique qui présente plusieurs compartiments frigorifiques réglables séparément et un circuit frigorifique qui comprend plusieurs évaporateurs pour les compartiments frigorifiques à régler séparément et une vanne à plusieurs voies pour répartir l'écoulement de fluide frigorifique du circuit de réfrigération entre les différents évaporateurs, la vanne à plusieurs voies présentant un boîtier (1) qui présente plusieurs entrées et sorties (2, 4a, 4b, 4c) et au moins une chambre (5) qui présente plusieurs sièges (14a, 14b) associés respectivement à une entrée ou à une sortie, un organe de fermeture (13) qui peut être déplacé entre les sièges (14a, 14b, 14c), au moins un organe de réglage (15a, 15b, 15c) qui présente la forme d'un élément en alliage à mémoire de forme qui est en mesure de repousser l'organe de fermeture (13) hors de l'un des sièges (14a, 14b, 14c) lorsqu'il est chauffé et un dispositif électrique de chauffage (16) associé à l'organe de réglage (15a, 15b, 15c) pour chauffer sélectivement l'organe de réglage, **caractérisé en ce que** le dispositif de chauffage (16) peut être refroidi par contact direct avec le fluide qui traverse la vanne et **caractérisé par** un élément élastique (19, 40) qui repousse l'élément de fermeture (13) contre chacun des sièges (14a, 14b) resp. occupé par lui.

2. Appareil frigorifique selon la revendication 1, **caractérisé en ce que** l'élément élastique est une lame de ressort (19).

3. Appareil frigorifique selon l'une des revendications précédentes, **caractérisé en ce que** l'élément élastique (19, 40) présente plusieurs positions stables et **en ce que** dans chacune des positions stables, il repousse l'organe de fermeture (13) contre l'un des sièges (14a, 14b, 14c).

4. Appareil frigorifique selon l'une des revendications précédentes, **caractérisé en ce que** l'organe de fermeture (13) peut être déplacé entre deux sièges (14a, 14b) tournés l'un vers l'autre et **en ce que** la lame de ressort (19) est en mesure de prendre deux positions stables dans chacune desquelles une courbure convexe de la lame de ressort (19) est tournée vers l'un des sièges (14,a, 14b).

5. Appareil frigorifique selon l'une des revendications précédentes, **caractérisé en ce que** l'organe de réglage (15a, 15b, 15c) est un corps courbé qui présente un côté convexe tourné vers l'organe de fermeture (13) et qui s'allonge lorsqu'il est chauffé.

6. Appareil frigorifique selon l'une des revendications précédentes, **caractérisé en ce qu'**il comprend un boîtier (1) doté d'une chambre centrale (11) dans laquelle l'organe de fermeture (13) peut se déplacer et au moins une chambre périphérique (12a, 12b), chaque chambre périphérique (12a, 12b) recevant un organe de réglage (15a, 15b) et étant en mesure de communiquer avec la chambre centrale (11) par une ouverture entourée par l'un des sièges (14a, 14b), une tige de transmission (33a, 33b) s'étendant par l'ouverture de l'organe de réglage (15a, 15b) à l'organe de fermeture (13).

7. Appareil frigorifique selon l'une des revendications 1 à 5, **caractérisé en ce que** l'élément élastique (19) et l'au moins un organe de réglage (15a, 15b) sont installés dans une chambre (5) commune et **en ce que** l'organe de réglage (15a, 15b) est disposé entre une paroi latérale du boîtier (1) qui présente l'un des sièges (14a, 14b) et l'élément élastique (19).

8. Appareil frigorifique selon la revendication 7, **caractérisé en ce que** l'organe de réglage (15a, 15b) présente une ouverture (24a, 24b) à travers laquelle l'organe de fermeture (13) peut être déplacé pour fermer ou libérer le siège (14a, 14b).

9. Appareil frigorifique selon les revendications 7 ou 8, **caractérisé en ce que** deux sièges (14a, 14b) sont disposés dans des parois latérales diamétralement opposées du boîtier (1).

10. Appareil frigorifique selon l'une des revendications 1 à 9, **caractérisé en ce que** les dispositifs de chauffage (16) de deux organes de réglage (15a, 15b) peuvent être alimentés en alternance en courant de chauffage par des diodes antiparallèles (36a, 36b).

11. Appareil frigorifique selon l'une des revendications 1 à 10, **caractérisé en ce que** le dispositif de chauffage est une résistance chauffante (16) qui s'étend à la surface de l'organe de réglage (15a, 15b, 15c).

12. Appareil frigorifique selon l'une des revendications 1 à 10, **caractérisé en ce que** le dispositif de chauffage est disposé hors du boîtier (1).

13. Appareil frigorifique selon la revendication 12, **caractérisé en ce que** le boîtier (1) et l'organe de réglage (15a, 15b) sont réalisés d'un seul tenant en un alliage à mémoire de forme.
